# EUROPÄISCHE PATENTSCHRIFT

(11) **EP 2 462 057 B1**
(45) Veröffentlichungstag und Bekanntmachung des Hinweises auf die Patenterteilung: **06.09.2017**
(21) Anmeldenummer: 10732357.8
(22) Anmeldetag: 12.07.2010
(51) Int. Cl.: C01B 17/76, C01B 17/79, C01B 17/80

(54) **VERFAHREN ZUR SCHWEFELSÄUREHERSTELLUNG**
METHOD FOR PRODUCING SULPHURIC ACID
PROCÉDÉ DE PRODUCTION D'ACIDE SULFURIQUE

(30) Priorität: 06.08.2009 DE 102009036289
(43) Veröffentlichungstag der Anmeldung: 13.06.2012
(73) Patentinhaber: ThyssenKrupp Industrial Solutions AG, 45143 Essen (DE)
(72) Erfinder: SCHÖNEBERGER, Jan, 44143 Dortmund (DE); THIELERT, Holger, 44379 Dortmund (DE)
(74) Vertreter: Lorenz, Bernd Ingo Thaddeus
(86) Internationale Anmeldenummer: PCT/EP2010/059954
(87) Internationale Veröffentlichungsnummer: WO 2011/015424

(56) Entgegenhaltungen:
- DD-A1- 207 182
- US-A- 5 288 303
- US-A- 5 683 670
- US-A- 6 149 886

## Beschreibung

Die Erfindung betrifft ein Verfahren zur Schwefelsäureerzeugung, wobei ein schwefeldioxidhaltiger Produktgasstrom hergestellt wird, der einem Reaktionsraum zugeführt wird, in dem an einem Katalysator eine Reaktion von Schwefeldioxid zu Schwefeltrioxid abläuft und das entstandene Schwefeltrioxid in weiteren Anlagenteilen zu Schwefelsäure umgesetzt wird.
Schwefelsäure gehört zu den bedeutendsten Grundchemikalien. Ihre großtechnische Herstellung erfolgt in drei Schritten:
1. Gewinnung von Schwefeldioxid (SO₂),
2. Oxidation von Schwefeldioxid (SO₂) zu Schwefeltrioxid (SO₃),
3. Umsetzung von Schwefeltrioxid (SO₃) zu Schwefelsäure (H₂SO₄).

Die klassische Herstellung von Schwefelsäure wird in der Literatur auch als Kontaktverfahren bezeichnet.
Als Ausgangsstoff für die Schwefelsäureherstellung kann elementarer Schwefel dienen. Er fällt bei der Entschwefelung von Erdöl oder Erdgas in Raffinerien oder beim Abrösten sulfidischer Erze, sowie bei der Entschwefelung der Rauchgase von Kohlekraftwerken an. Dient Schwefel als Rohstoff erfolgt die Schwefeldioxid-Herstellung durch die Verbrennung des Schwefels in Zerstäubungsbrennern, wobei der flüssige Schwefel unter hohem Druck in die Brennerdüse gepresst wird.

Schwefeldioxid kann auch durch Verbrennung oder katalytische Umsetzung von schwefelwasserstoffhaltigen Abgasen, die z.B. bei er Reinigung von Koksofengasen anfallen, erzeugt werden.

Bei der Verbrennung der Schwefelquelle, beispielsweise Schwefelwasserstoff bei der Nasskatalyse oder flüssiger Schwefel aus Claus Anlagen, ist die Bildung von Stickoxiden (NOx) zu vermeiden. Daher dürfen Temperaturen von 1200 °C nicht überschritten werden. Um dennoch einen vollständigen Umsatz der Schwefelquelle zu Schwefeldioxid zu erreichen, kann die Verbrennung mit einem hohen Luftüberschuss gefahren werden, wobei ein Kühleffekt durch den Stickstoff und den nicht umgesetzten Sauerstoff bewirkt wird. Jedoch wird auf diese Weise auch vermehrt Luftfeuchtigkeit in das Verfahren eingetragen. Dies senkt die maximal erreichbare Konzentration an Produktsäure. Alternativ kann der Verbrennung inertes Kaltgas zugeführt werden, wie dies im KaltgasRecycle-Prozess geschieht. Diese Maßnahme führt jedoch zu großen Mengen an zirkuliertem Gas. Dadurch müssen die im weiteren Prozess benötigten Apparate für größere Gasströme ausgelegt werden.

Das im ersten Produktionsschritt erzeugte Rohgas weist zumeist einen SO₂-Gehalt zwischen 3 und 12 Vol.-% auf. Das Rohgas wird in der Regel in einem Abhitzekessel abgekühlt und zur Einstellung eines überstöchiometrischen O₂/SO₂-Verhältnisses ggf. mit Luft verdünnt. Die exotherme Reaktion von SO₂ zu SO₃ erfolgt an Katalysatoren, z.B. Vanadiumpentoxid (V₂O₅), bei Temperaturen zwischen 400 und 650 °C. Bei klassischen Verfahren wird die Umsetzung von SO₂ zu SO₃ mit einem großen Luftüberschuss gefahren. Dafür gibt es zwei Gründe. Zum einen verschiebt eine hohe Sauerstoffkonzentration das Reaktionsgleichgewicht in Richtung des Schwefeltrioxids. Zum anderen wird die Luft zur Kühlung des Gases zwischen zwei Reaktorbetten eingesetzt, wodurch Wärmetauscher eingespart werden können.

Das im zweiten Produktionsschritt gebildete SO₃ wird gekühlt und in einen Absorber geführt. Der Absorber enthält eine Füllkörperschüttung, die von oben mit im Kreislauf geführter Schwefelsäure berieselt wird. Das im Gegenstrom strömende SO₃-Gas wird von der Schwefelsäure absorbiert und setzt sich mit vorhandenen Wasser zu Schwefelsäure um.

Die US 5,288,303 A offenbart ein Verfahren zur Rauchgasbehandlung, bei dem unter anderem Schwefeldioxid zur Schwefelsäureerzeugung katalytisch zu Schwefeltrioxid umgesetzt wird. Während einer Aufwärmphase wird der Katalysator von vorgeheizter Luft durchströmt.

Auch die US 6,149,886 A1 betrifft ein Verfahren zur Entschwefelung eines Gasstromes wobei Schwefeldioxid katalytisch umgesetzt wird. Der Katalysator ist in zwei seriell hintereinander geschalteten Kolonnen angeordnet. Mittels der vorgesehenen Armaturen lässt sich die Strömungsrichtung und damit die Reihenfolge, in der die Kolonnen durchströmt werden, umkehren.

Aufgabe der Erfindung ist es, ein Verfahren zur Verfügung zu stellen, bei dem eine hohe Ausbeute an Schwefelsäure mit einer geringen Menge an Katalysator erreicht wird. Weiterhin sollen die eingesetzten Apparate im Verhältnis zur produzierten Schwefelsäuremenge möglichst klein und somit kostengünstig dimensioniert werden.

Diese Aufgabe wird erfindungsgemäß dadurch gelöst, dass dem Reaktionsraum im Wechsel zum Produktgasstrom ein Oxidationsgasstrom zugeführt wird.

Gemäß der Erfindung weist das Verfahren mindestens einen weiteren Reaktionsraum auf. In einer Phase während durch den ersten Reaktionsraum der Oxidationsgasstrom geleitet wird, strömt der Produktgasstrom durch den zweiten Reaktionsraum. Auf diese Weise wird ein kontinuierlicher Betrieb der Schwefelsäureerzeugungsanlage ermöglicht. Wird der erste Reaktionsraum von dem Oxidationsgasstrom durchströmt, übernimmt der zweite Reaktionsraum die Umsetzung von SO₂ zu SO₃ im Produktgasstrom.

Erfindungsgemäß wird in einer Phase, während der dem ersten Reaktionsraum der Produktgasstrom zugeführt wird, dem zweiten Reaktionsraum der Oxidationsgasstrom zugeführt. Nach Ablauf dieser Phase wird die Führung der Gasströme so geändert, dass dem ersten Reaktionsraum der Oxidationsgasstrom und dem zweiten Reaktionsraum der Produktgasstrom zugeführt wird. Dieser Zyklus wiederholt sich zyklisch.

Während der ersten Phase eines Zyklus im Reaktionsraum reagiert das im Produktgasstrom befindliche SO₂ mit dem am Katalysator gebundenen Sauerstoff zu SO₃. Die erste Phase wird daher auch als Reaktionsphase bezeichnet. Bei dem erfindungsgemäßen Verfahren wird die Metallphase des Katalysators im Zyklus zuvor mit Sauerstoff gesättigt. Während der Reaktionsphase sind im Produktgasstrom nur geringe Mengen an Sauerstoff vorhanden. In einer bevorzugten Variante des Verfahrens enthält der Produktgasstrom einen Sauerstoffanteil von weniger als 1 Mol.-%, vorzugsweise weniger als 0,5 Mol.-%. Der Produktgasstrom kann auch völlig frei von Sauerstoff sein. Den zur Oxidation benötige Sauerstoff entzieht das SO₂ dem Katalysator.

Der Schwefeldioxidanteil im Produktgasstrom beträgt am Eintritt in den Reaktionsraum vorzugsweise mehr als 1 Mol.-% und weniger als 20 Mol.-%.

Bei einer besonders vorteilhaften Variante des Verfahrens enthält der Produktgasstrom am Eintritt einen Schwefeldioxidanteil von mehr als 3 Mol.-% und weniger als 12 Mol.-%.

Während der zweiten Phase eines Zyklus wird der Katalysator im Reaktionsraum erfindungsgemäß von einem Oxidationsgasstrom überströmt. Der Zustrom von Produktgas in diesen Reaktionsraum wird während der zweiten Phase gestoppt.

In einer vorteilhaften Ausführung des Verfahrens enthält der Oxidationsgasstrom einen Sauerstoffanteil von mehr als 10 Vol.-%. Vorzugsweise wird Luft als Oxidationsgasstrom verwendet. Auch Gasgemische mit einem Sauerstoffanteil von mehr als 21 Vol.-% bzw. reiner Sauerstoff können eingesetzt werden. Der Oxidationsgasstrom enthält vorzugsweise keine Gaskomponenten die den Katalysator reduzieren. Insbesondere erweist es sich als günstig, wenn der Oxidationsgasstrom frei von Schwefeldioxid ist.

Ein Teil des, im Oxidationsgasstrom enthaltenen, Sauerstoffs wird während der zweiten Phase vom Katalysator gebunden. Die zweite Phase wird daher auch als Sauerstoffsättigungsphase bezeichnet. Oberhalb einer Temperatur von 300 °C kann in den Katalysatorschüttungen eine Verflüssigung der bis dahin festen Metallphase auf der Katalysatoroberfläche auftreten. An der Katalysatoroberfläche kann noch gebundenes Schwefeltrioxid aus der Reaktionsphase vorhanden sein, das nun frei wird. Der Sauerstoff aus dem Oxidationsgasstrom geht in die Metallphase über. Dieser Sauerstofftransport dauert an bis die Metallphase des Katalysators gesättigt ist.

Im Reaktionsraum ist ein Katalysatorbett angeordnet. Das Katalysatorbett ist vorzugsweise als Katalysatorschüttung ausgebildet. Die Katalysatorschüttung kann dabei aus Strangpresslingen bestehen, auf die eine dünne Lage aktiver Katalysatorsubstanz aufgetragen ist. Denkbar ist auch der Einsatz monolithische Formkörper. Die Monolithe können von Kanälen durchzogen sein, welche vom Reaktionsgemisch durchströmt werden. Die Oberfläche der Kanäle ist mit der aktiven Katalysatorsubstanz beschichtet.

Es erweist sich als günstig, wenn im Reaktionsraum mehrere Katalysatorbetten angeordnet sind, an denen die Reaktion von SO₂ zu SO₃ abläuft. Günstigerweise befindet sich auf jedem Hordenboden des Kontaktreaktors eine Katalysatorschüttung. Da es sich bei der Umsetzung von SO₂ zu SO₃ um eine exotherme Reaktion handelt, erweist es sich als vorteilhaft, nach jeder Horde eine Zwischenkühlung nachzuschalten.

Als katalytisch aktive Substanz wird vorzugsweise Vanadiumpentoxid V₂O₅ eingesetzt, an dem die Umsetzung von SO₂ zu SO₃ an einer sauerstoffgesättigten Flüssigmetallphase, Saturated Metal Phase (SMP), abläuft.

In der Regel handelt es sich bei den Reaktionsräumen um jeweils selbstständige Reaktoren. Bei dem erfindungsgemäßen Verfahren können auch mehr als zwei Reaktoren zum Einsatz kommen, wobei sich eine gerade Anzahl empfiehlt, da diese immer paarweise im Wechselbetrieb gefahren werden können. Es besteht prinzipiell auch die Möglichkeit, zwei Reaktionsräume, welche im Wechselbetrieb zueinander gefahren werden, innerhalb eines Reaktors anzuordnen. Die großtechnische Realisierung des erfindungsgemäßen Verfahrens kann somit entweder über zwei Kontakttürme oder über integrierte Reaktorkonzepte wie Mehrbetttürme oder Ringreaktoren stattfinden.

Die Reaktionsräume werden im Wechsel zwischen einer Reaktionsphase und einer Sauerstoffsättigungsphase betrieben. Während dem ersten Reaktionsraum der schwefeldioxidhaltige Produktgasstrom zugeführt wird, strömt der sauerstoffhaltige Oxidationsgasstrom durch den zweiten Reaktionsraum. Danach wird die Führung der Gasströme getauscht. Ein Zyklus umfasst pro Reaktionsraum somit eine Reaktionsphase und eine Sauerstoffsättigungsphase.

Bei der Reaktion von Schwefeldioxid zu Schwefeltrioxid stellt sich ein Reaktionsgleichgewicht ein:

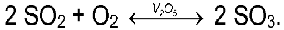

Je nach Gleichgewichtslage bleibt auf der Eduktseite somit ein Rest an Schwefeldioxid und Sauerstoff vorhanden. Durch die vorherige Sättigung der Metallphase des Katalysators mit Sauerstoff braucht dem Katalysatorbett lediglich der nach der zu erwartenden Gleichgewichtslage erforderliche Anteil an Sauerstoff zugeführt zu werden. Der zur Reaktion benötigte Sauerstoff stammt aus der Metallphase des Katalysators.

Durch eine abwechselnde Beaufschlagung der Katalysatorbetten mit einem schwefeldioxidreichen Produktgasstrom und anschließend mit einem sauerstoffreichen Oxidationsgasstrom wird eine Maximierung der Reaktionsrate erreicht. Bei dem erfindungsgemäßen Verfahren ist die Reaktionsrate trotz der geringen Sauerstoffzufuhr sehr hoch. Die Katalysatormenge, die zum Erreichen eines bestimmten Reaktionsgleichgewichtes benötigt wird, kann erheblich reduziert werden. Dadurch wird gegenüber herkömmlichen Verfahren ein deutlich kleineres Reaktorvolumen benötigt.

Weiterhin wird bei dem erfindungsgemäßen Verfahren der Gasstrom, der den Downstream-Prozessen nach der Umsetzung von SO₂ zu SO₃ zugeführt wird, reduziert, da der Produktgasstrom nur geringe Mengen an Sauerstoff enthält. Dadurch können die bei den Downstream-Prozessen eingesetzten Apparate, wie beispielsweise Wärmetauscher oder Gaswäscher, kleiner ausgelegt werden, was zu einer Kostenreduktion führt.
Als besonders günstig erweist es sich, wenn der Oxidationsgasstrom nach Durchströmen eines Reaktionsraums zur Herstellung des schwefeldioxidhaltigen Gasstroms eingesetzt wird. Im Reaktionsraum wird der Katalysator mit Sauerstoff aus dem Oxidationsgasstrom gesättigt. Dadurch sinkt der Sauerstoffanteil im Oxidationsgasstrom. Nach dem Reaktionsraum weist der Oxidationsgasstrom im Mittel Sauerstoffanteile von nur noch 15 Mol.-% auf. Aufgrund des geringeren Sauerstoffanteils wird die bei der Umsetzung der Schwefelquelle zu SO₂ erzeugte Temperatur gesenkt. Dadurch wird die Bildung von Stickoxiden (NOₓ) vermindert. Eine geeignete Schwefelsäurenlage zur Durchführung des erfindungsgemäßen Verfahrens zur Lenkung der Gasströme mit Armaturen ausgestattet. Vorzugweise werden dabei Drei-Wege-Ventile eingesetzt. Die Armaturen sind über Stellantriebe betätigbar. Dazu können elektrische, pneumatische oder hydraulische Stellantriebe zur Anwendung kommen. Die Armaturen sind erfindungsgemäß so ansteuerbar, dass den Reaktionsräumen im gegenseitigen Wechsel zum Produktgasstrom, ein Luftstrom zuführbar ist.

In einer besonders vorteilhaften Variante des Verfahrens werden die Ventile, welche die Führung der Gasströme steuern, so geschaltet, dass die jeweiligen Reaktionsräume von dem Produktgasstrom und dem Oxidationsgasstrom jeweils in entgegen gesetzter Richtung durchströmt werden.

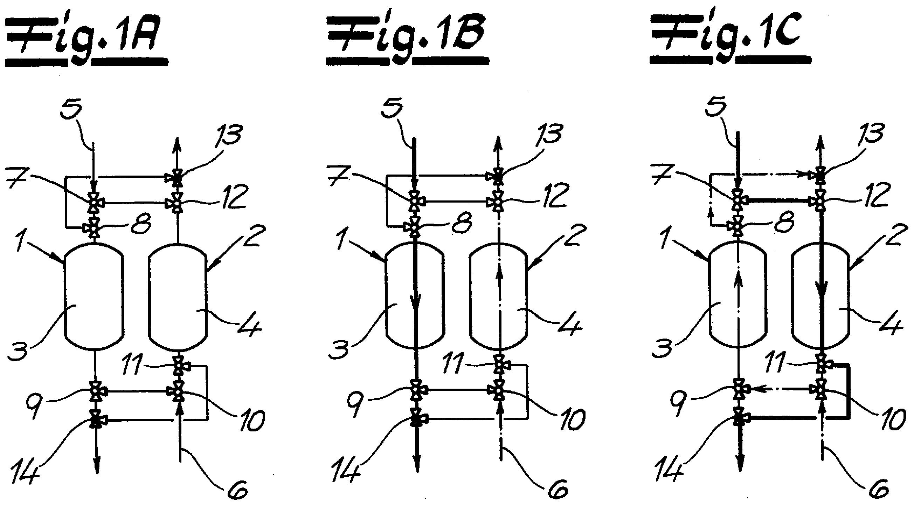

Weitere Merkmale und Vorteile der Erfindung ergeben sich aus der Beschreibung von Ausführungsbeispielen anhand von Zeichnungen und aus den Zeichnungen selbst. Dabei zeigt
- Fig. 1 a: ein Schaltbild zweier Reaktionsräume zur Umsetzung von SO₂ zu SO₃,
- Fig. 1 b: ein Schaltbild, bei dem der linke Reaktionsraum vom Produktgasstrom durchströmt wird,
- Fig. 1 c: ein Schaltbild, bei dem der rechte Reaktionsraum vom Produktgasstrom durchströmt wird,
- Fig. 2: an einer Technikumsanlage gemessene Temperaturprofile während eines periodischen Reaktorbetriebs,
- Fig. 3: an einer Technikumsanlage gemessene Temperaturprofile bei einem Anfahrprozess,
- Fig. 4: den Reaktionsmechanismus der Schwefeldioxidoxidation an Vanadiumpentoxid,
- Fig. 5: eine Online Konzentrationsmessung mit einem Raman Spektroskop während der Aufwärmphase und dem Reaktionsstart,
- Fig. 6: an einer Technikumsanlage gemessene Temperaturprofile während einer Aufwärmphase, einer Reduktionsphase und einer Reaktionsphase.

In Fig. 1a sind die Reaktionsräume 1 und 2 dargestellt, die Teil eines Verfahrens zur Schwefelsäureerzeugung sind. In den Reaktionsräumen 1, 2 findet eine Umsetzung von SO₂ zu SO₃ statt. Die Reaktionsräume 1, 2 sind als Kontaktreaktoren ausgeführt. In den Reaktionsräumen 1, 2 befinden sich die Katalysatoren 3, 4. Die Katalysatoren 3, 4 sind als Schüttungen in die Reaktionsräume 1, 2 eingebracht und bilden zwei Katalysatorbetten, an denen die Umsetzung zu Schwefeltrioxid abläuft. Die Reaktionsräume 1, 2 werden im gegenseitigen Wechsel des Produktgasstroms 5 und des Oxidationsgasstroms 6 betrieben. Die Führung des schwefeldioxidhaltigen Produktgasstroms 5 und des Oxidationsgasstroms 6 werden mit Hilfe der Drei-Wege-Ventile 7, 8, 9, 10, 11, 12 gesteuert. Zusätzlich dienen die Armaturen 13, 14 der Lenkung der Gasströme (5, 6).

Fig. 1b zeigt eine Betriebsphase bei der dem Reaktionsraum 1 der Produktgasstrom 5 zugeführt wird. Die Drei-Wege-Ventile 7, 8 leiten den Produktgasstrom 5 zum Reaktionsraum 1. An dem Katalysator 3 reagiert das Schwefeldioxid zu Schwefeltrioxid. Der Produktgasstrom 5 verlässt den Reaktionsraum 1 und strömt über das Drei-Wege-Ventil 9 und die Armatur 14 zu dem Anlagenteil, in dem die Umsetzung des Schwefeltrioxids zur Schwefelsäure stattfindet. Während der in Fig. 1b dargestellten Betriebsphase wird der Reaktionsraum 2 von dem Oxidationsgasstrom 6 durchströmt. Bei dem Oxidationsgasstrom 6 handelt es sich im Ausführungsbeispiel um einen reinen Luftstrom. Der Katalysator 4 im Reaktionsraum 2 wird während dieser Betriebsphase mit dem Sauerstoff aus der Luft bis zur Sättigung beladen. Der Sauerstoffanteil im Oxidationsgasstrom 6 nimmt beim Durchströmen des Reaktionsraums 2 ab. Über das Drei-Wege-Ventil 12 und die Armatur 13 wird der an Sauerstoff verarmte Oxidationsgasstrom 6 der Brennkammer zugeleitet, in der das Schwefeldioxid hergestellt wird. In der Brennkammer wird eine Schwefelquelle mit dem Oxidationsgasstrom 6 zu SO₂ umgesetzt.

Fig. 1c zeigt eine Betriebsphase, bei der dem Reaktionsraum 1 der Oxidationsgasstrom 6 zugeführt wird. Die Drei-Wege-Ventile 10, 9 leiten den Oxidationsgasstrom 6 zum Reaktionsraum 1. In dieser Betriebsphase wird der Reaktionsraum 1 in umgekehrter Richtung zur Produktgasführung durchströmt. Der Katalysator 3 nimmt Sauerstoff aus dem Oxidationsgastrom 6 auf. Der Sauerstoffanteil im Oxidationsgasstrom 6 sinkt beim Durchströmen des Reaktionsraums 1. Der an Sauerstoff verarmte Oxidationsgasstrom 6 verlässt den Reaktionsraum 1 und strömt über das Drei-Wege-Ventil 8 und die Armatur 13 zur Brennkammer, in der die Herstellung von Schwefeldioxid stattfindet. Bei der in Fig. 1c dargestellten Betriebsphase wird der Reaktionsraum 2 vom Produktgasstrom 5 durchströmt. Der Produktgasstrom wird über die Drei-Wege-Ventile 7, 12 dem Reaktionsraum 2 zugeleitet. In dieser Betriebsphase wird der Reaktionsraum 2 in umgekehrter Richtung zur Oxidationsgasführung durchströmt. Am Katalysator 4 im Reaktionsraum 2 wird während dieser Betriebsphase das im Produktgasstrom vorhandene Schwefeldioxid zu Schwefeltrioxid umgesetzt.

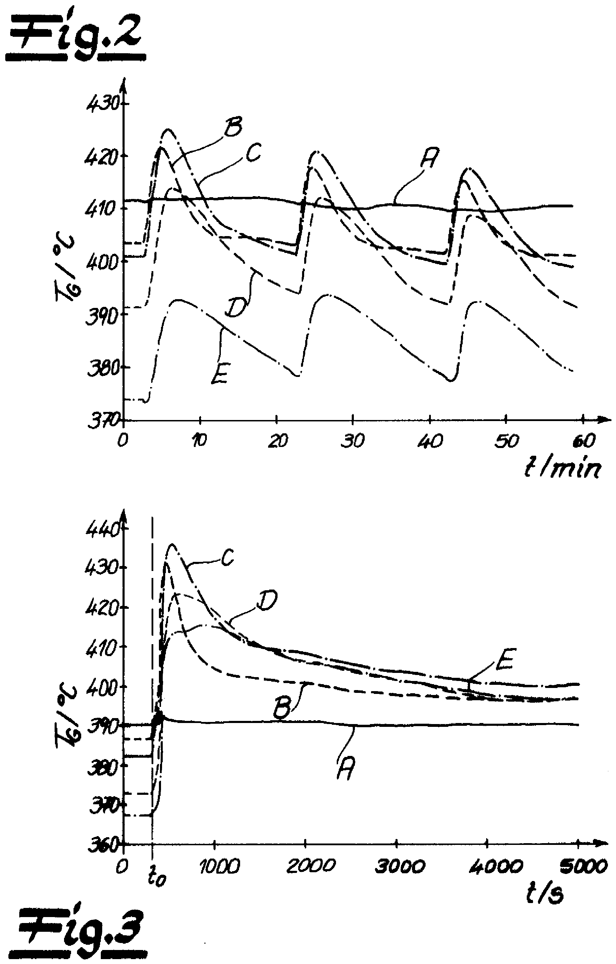

Über das Drei-Wege-Ventil 11 und die Armatur 14 wird der Produktgasstrom 5 dem Anlagenteil zugeleitet, in dem das Schwefeltrioxid zu Schwefelsäure umgesetzt wird. Fig. 2 zeigt einen in einer Technikumsanlage realisierten periodischen Reaktorbetrieb. Im Reaktionsraum der Technikumsanlage sind vier Katalysatorbetten übereinander angeordnet. Bei dem in Fig. 2 dargestellten Diagramm ist die Gastemperatur T_{G} in °Celsius über der Zeit t in Minuten aufgetragen. Die im Diagramm eingezeichneten Linien stellen folgende Kurven da:
A: Eintrittstemperatur,
B: Austritt Bett 1,
C: Austritt Bett 2,
D: Austritt Bett 3,
E: Austritt Bett 4.

Ein Zyklus des Betriebs der Technikumsanlage beträgt 20 Minuten. Pro Zyklus wird der Reaktor während einer ersten Phase von 10 Minuten mit dem schwefeldioxidhaltigen Produktgasstrom 5 durchströmt. Der in den Reaktor eintretende Produktgasstrom 5 setzt sich zu 95,5 Mol.-% aus Stickstoff, zu 4 Mol.-% aus Schwefeldioxid und zu 0,5 Mol.-% aus Sauerstoff zusammen. Während einer zweiten Phase von ebenfalls 10 Minuten wird dem Reaktor der Oxidationsgasstrom 6 zugeführt. Der in den Reaktor eintretende Oxidationsgasstrom 6 setzt sich zu 79 Mol.-% aus Stickstoff und zu 21 Mol.-% aus Sauerstoff zusammen. Der Oxidationsgasstrom 6 enthält kein Schwefeldioxid.

Fig.3 zeigt an der Technikumsanlage gemessene Temperaturprofile bei einem Anfahrprozess. Bei dem in Fig. 3 dargestellten Diagramm ist die Gastemperatur TG in °Celsius über der Zeit t in Sekunden aufgetragen. Die Bezeichnung der Kurven entspricht der dem Diagramm der Fig. 2.

Die Reaktion startet zum Zeitpunkt t₀. Die gemessene Gastemperatur erreicht ein Maximum, das bis zu 50 Kelvin über der Temperatur liegt, die am stationären Punkt erreicht wird. Diese Temperaturspitzen werden bei allen Reaktionsbedingungen und Katalysatoren beobachtet.

Der SMP Effekt, Saturated-Metall-Phase Effekt, kann bei Inbetriebnahme einer Technikumsanlage beobachtet werden. Die Anlage wird bis zum Erreichen eines stationären Temperaturprofils im Reaktor mit Druckluft betrieben. Ab einer Temperatur von über 300 °C in den Katalysatorschüttungen kann die Bildung eines leichten Schwefelsäurenebels in einer Blasensäule beobachtet werden. Das Auftreten dieses Nebels zeigt eine Verflüssigung der bis dahin festen Metallphase auf der Katalysatoroberfläche an. In der festen Phase gebundenes Schwefeltrioxid aus vorangegangenen Versuchen wird dabei frei und reagiert mit dem Wasser in der Blasensäule zu Schwefelsäure. Gleichzeitig beginnt der Sauerstoff, aus der Druckluft (x_{O2} > 20 Vol.-%), in die Metallphase überzugehen. Dieser Stofftransport dauert an bis die Metallphase gesättigt ist, die Sauerstoffzufuhr unterbrochen wird oder Schwefeldioxid in den Reaktor gelangt. Bei einem Umschalten auf ein Feedgemisch aus Schwefeldioxid und Sauerstoff (x_{O2} < 10 Vol .-%) startet die Reaktion umgehend und es werden hohe Reaktionsraten erreicht, da das zugeführte Schwefeldioxid mit dem in der Metallphase gelöstem Sauerstoff reagiert. Die exotherme Reaktion führt zu einem starken Anstieg der Katalysatortemperatur. Von den Katalysatorpartikeln wird die Reaktionswärme an den Gasstrom abgegeben. Sobald der gelöste Sauerstoff verbraucht ist sinkt die Reaktionsrate, da nun die Absorption von Sauerstoff aus der Gasphase zum geschwindigkeitsbestimmenden Schritt wird.

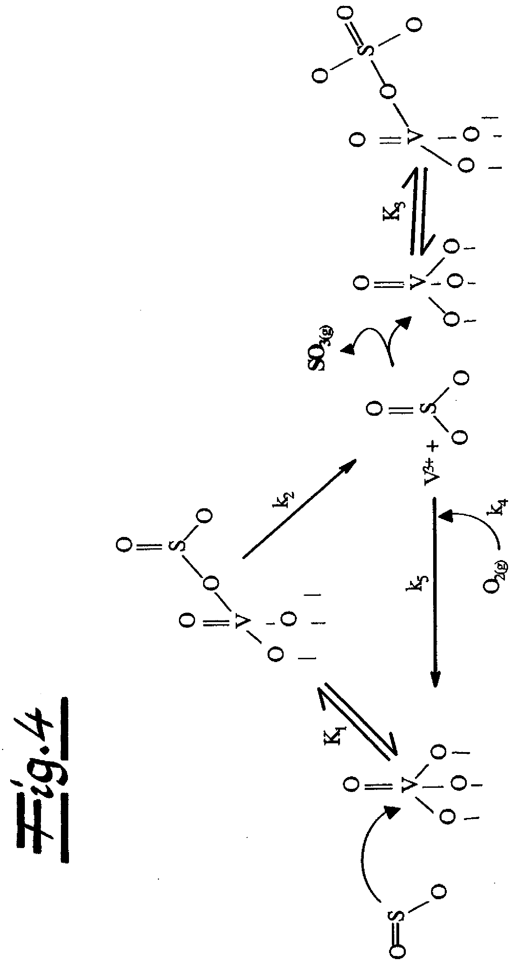

Fig. 4 zeigt den Reaktionsmechanismus der Schwefeldioxidoxidation an Vanadiumpentoxid. Alle neueren Untersuchen zur Schwefeldioxidoxidation an Vanadiumpentoxid gehen davon aus, dass die Reaktionen in der flüssigen Metallphase ablaufen. In der Veröffentlichung "Oxidation of Sulfur Dioxide to Sulfur Trioxide over Supported Vanadia Catalysts, Applied Catalysis B: Environmental, Vol. 19, Pp. 103-117, 1998, stellt Dunn einen weitgehend akzeptierten Reaktionsmechanismus aus 5 Folge- und Parallelreaktion auf. Die Reaktion 5, die Oxidation von V³⁺ zu V⁵⁺, gilt bei dem Mechanismus als geschwindigkeitsbestimmender Reaktionsschritt. Unter den Bedingungen, die bei den in Fig. 3 dargestellten Versuchen in der Technikumsanlage eingestellt wurden, befindet sich ein Grossteil des Vanadiums am Katalysator bei Reaktionsbeginn bereits in der 5ten Oxidationsstufe. Somit wird ein anderer Reaktionsschritt des Mechanismus geschwindigkeitsbestimmend. Die Gesamtreaktionsrate ist also bei den in der Technikumsanlage vorherrschenden Bedingungen deutlich höher als bei den üblichen Reaktionsbedingungen.

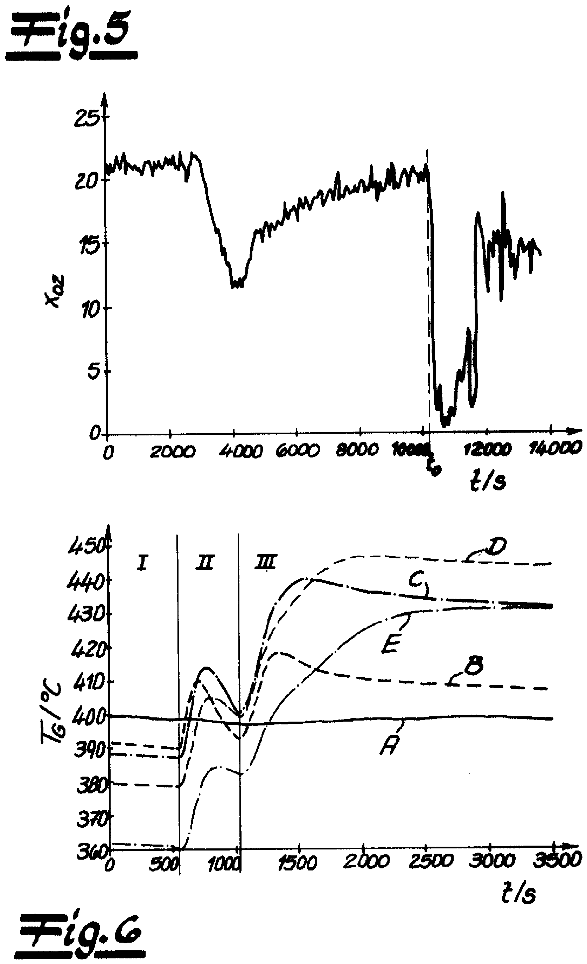

In Fig. 5 ist eine Online Konzentrationsmessung mit einem Raman Spektroskop während der Aufwärmphase und dem Reaktionsstart dargestellt. Bei dem in Fig. 5 dargestellten Diagramm ist der Sauerstoffmolenanteil X_{O2} am Reaktoraustritt in Prozent über der Zeit t in Sekunden aufgetragen. Die Konzentrationsmessung wird bereits während der Aufwärmphase mit Druckluft begonnen. Ab einer Temperatur von 315 °C fällt der Sauerstoffanteil am Reaktoraustritt schlagartig auf ca. 10 Mol.-% ab. Nach Start der Reaktion, zum Zeitpunkt t₀, nimmt der Sauerstoffanteil noch deutlicher ab. Die Reaktion wird kurz nach dem Start abgebrochen.

Bei dem Versuch wird anfangs also etwa die Hälfte des mit der Druckluft eingetragenen Sauerstoffs am Katalysator gebunden. Mit zunehmender Sättigung und steigender Temperatur steigt auch der Sauerstoffanteil im Austrittsstrom wieder an. Es geht also ein bedeutender Anteil an Sauerstoff während der Aufwärmphase aus der Druckluft in die Metallphase über.

In Fig. 6 sind an der Technikumsanlage gemessene Temperaturprofile während einer Aufwärmphase, einer Reduktionsphase und einer Reaktionsphase dargestellt. In dem in Figur 6 dargestellten Diagramm ist die Gastemperatur T_{G} in °Celsius über der Zeit t in Sekunden aufgetragen. Die Bezeichnung der Kurven entspricht der dem Diagramm der Fig. 2.

Während der Aufwärmphase, die im Bereich I des Diagramms dargestellt ist, setzt sich der Gasstrom aus 79 Mol.-% Stickstoff, 21 Mol.-% Sauerstoff und 0 Mol.-% Schwefeldioxid zusammen. Während der Reduktionsphase, die im Bereich II des Diagramms dargestellt ist, setzt sich der Gasstrom aus 96 Mol.-% Stickstoff, 0 Mol.-% Sauerstoff und 4 Mol.-% Schwefeldioxid zusammen. Während der Reaktionsphase, die im Bereich III des Diagramms dargestellt ist, setzt sich der Gasstrom aus 90 Mol.-% Stickstoff, 6 Mol.-% Sauerstoff und 4 Mol.-% Schwefeldioxid zusammen.

Während der Reduktionsphase wurden somit Versuche durchgeführt, bei denen das Gasgemisch zwar Schwefeldioxid enthält, jedoch keinen Sauerstoff. Die Temperaturverläufe im Bereich II bestätigen, dass trotz des fehlenden Sauerstoffs eine Wärmeentwicklung auftritt und somit eine Reaktion abläuft. Die Höhe der Temperaturspitzen ist jedoch deutlich niedriger. Das kann damit erklärt werden, dass das am Katalysator gebildete Schwefeltrioxid in der Gasphase wieder zu Sauerstoff und Schwefeldioxid zerfällt, bis das chemische Gleichgewicht erreicht ist. Diese endotherme Zerfallsreaktion entzieht der Gasphase Energie, wodurch der Temperaturanstieg gedämpft wird. Wird nun, nach der Abreaktion des bereits gelösten Sauerstoffs, während der Reaktionsphase ein Gasgemisch mit Schwefeldioxid und Sauerstoff zugeführt, so sind die Temperaturspitzen, die im Bereich III dargestellt sind, deutlich geringer ausgeprägt. Das festigt die Theorie, dass die Ursache der Temperaturspitzen und Reaktionsgeschwindigkeitspitzen, der in der in der Metallphase gelöste Sauerstoff ist.

## Patentansprüche

1. Verfahren zur Schwefelsäureerzeugung, wobei ein schwefeldioxidhaltiger Produktgasstrom (5) hergestellt wird, der einem Reaktionsraum (1) zugeführt wird, in dem an einem Katalysator (3) eine Reaktion von Schwefeldioxid zu Schwefeltrioxid abläuft und das entstandene Schwefeltrioxid in weiteren Anlagenteilen zu Schwefelsäure umgesetzt wird, dadurchgekennzeichnet dass dem Reaktionsraum (1) im Wechsel zum Produktgasstrom (5) ein Oxidationsgasstrom (6) zugeführt wird, wobei
das Verfahren zumindest einen weiteren Reaktionsraum (2) mit Katalysator (4) aufweist, wobei in einer Phase während der durch den ersten Reaktionsraum (1) der Oxidationsgasstrom (6) geleitet wird, der Produktgasstrom (5) durch den zweiten Reaktionsraum (2) strömt,
und dass in einer Phase, während der dem ersten Reaktionsraum (1) der Produktgasstrom (5) zugeführt wird, dem zweiten Reaktionsraum (2) der Oxidationsgasstrom (6) zugeführt wird und nach Ablauf dieser Phase die Führung der Gasströme (5, 6) so geändert wird, dass dem ersten Reaktionsraum (1) der Oxidationsgasstrom (6) und dem zweiten Reaktionsraum (2) der Produktgasstrom (5) zugeführt wird und sich dieser Zyklus periodisch wiederholt.

2. Verfahren nach Anspruch 1, **dadurch gekennzeichnet, dass** die Katalysatoren (3, 4) Vanadiumpentoxid enthalten.

3. Verfahren nach einem der Ansprüche 1 oder 2, **dadurch gekennzeichnet, dass** Luft als Oxidationsgasstrom (6) eingesetzt wird.

4. Verfahren nach einem der Ansprüche 1 bis 3, **dadurch gekennzeichnet, dass** der Oxidationsgasstrom (6) kein Schwefeldioxid enthält.

5. Verfahren nach einem der Ansprüche 1 bis 4, **dadurch gekennzeichnet, dass** der Produktgasstrom (5) einen Sauerstoffanteil von weniger als 1 Mol .-%, vorzugsweise weniger als 0,5 Mol.-%, enthält.

6. Verfahren nach einem der Ansprüche 1 bis 5, **dadurch gekennzeichnet, dass** der Oxidationsgasstrom (6) nach Durchströmen eines Reaktionsraums (1, 2) zur Herstellung von Schwefeldioxid eingesetzt wird.

## Claims

1. Method for the production of sulphuric acid, wherein a sulphur-dioxide-containing product gas stream (5) is produced which is supplied to a reaction chamber (1), in which a reaction of sulphur dioxide to give sulphur trioxide takes place at a catalyst (3), and the sulphur trioxide produced is converted into sulphuric acid in further parts of the system, **characterized in that** an oxidation gas stream (6) is supplied to the reaction chamber (1) alternately to the product gas stream (5),
wherein the method comprises at least one further reaction chamber (2) with catalyst (4), wherein in a phase during which the oxidation gas stream (6) is led through the first reaction chamber (1), the product gas stream (5) flows through the second reaction chamber (2),
and that in a phase during which the product gas stream (5) is supplied to the first reaction chamber (1), the oxidation gas stream (6) is supplied to the second reaction chamber (2) and after this phase has elapsed, the guidance of the gas streams (5, 6) is changed so that the oxidation gas stream (6) is supplied to the first reaction chamber (1) and the product gas stream (5) is supplied to the second reaction chamber (2) and this cycle is periodically repeated.

2. The method according to claim 1, **characterized in that** the catalysts (3, 4) contain vanadium pentoxide.

3. The method according to any one of claims 1 or 2, **characterized in that** air is used as oxidation gas stream (6).

4. The method according to any one of claims 1 to 3, **characterized in that** the oxidation gas stream (6) contains no sulphur dioxide.

5. The method according to any one of claims 1 to 4, **characterized in that** the product gas stream (5) contains an oxygen component of less than 1 mol.%, preferably less than 0.5 mol.%.

6. The method according to any one of claims 1 to 5, **characterized in that** after flowing through a reaction chamber (1, 2), the oxidation gas stream (6) is used to produce sulphur dioxide.

## Revendications

1. Procédé de production d'acide sulfurique, lors duquel on créé un flux gazeux produit (5) contenant du dioxyde de soufre que l'on amène dans une chambre de réaction (1) dans laquelle sur un catalyseur (3) a lieu une réaction de dioxyde de soufre en trioxyde de soufre et le trioxyde de soufre obtenu est transformé dans des parties supplémentaires de l'installation en acide sulfurique, **caractérisé en ce que** dans la chambre de réaction (1), on amène en échange du flux gazeux produit (5) un flux gazeux oxydant (6),
le procédé comportant au moins chambre de réaction (2) supplémentaire, avec catalyseur (4), dans une première phase, pendant que le flux gazeux oxydant (6) est guidé à travers la première chambre de réaction (1), le flux gazeux produit (5) circule à travers la deuxième chambre de réaction (2) strômt,
et **en ce que** dans une phase, pendant que le flux gazeux produit (5) est amené dans la première chambre de réaction (1), le flux gazeux oxydant (6) est amené dans la deuxième chambre de réaction (2) et après écoulement de ladite phase, le guidage des flux gazeux (5, 6) est modifié de telle sorte que le flux gazeux oxydant (6) soit amené dans la première chambre de réaction (1) et le flux gazeux produit (5) soit amené dans la deuxième chambre de réaction (2) et que ce cycle se répète périodiquement.

2. Procédé selon la revendication 1, **caractérisé en ce que** les catalyseurs (3, 4) contiennent du pentoxyde de vanadium.

3. Procédé selon l'une quelconque des revendications 1 ou 2, **caractérisé en ce qu'**en tant que flux gazeux oxydant (6) on utilise de l'air.

4. Procédé selon l'une quelconque des revendications 1 à 3, **caractérisé en ce que** le flux gazeux oxydant (6) ne contient pas de dioxyde de soufre.

5. Procédé selon l'une quelconque des revendications 1 à 4, **caractérisé en ce que** le flux gazeux produit (5) contient une part d'oxygène inférieure à 1 % en moles, de préférence inférieure à 0,5 %, en moles.

6. Procédé selon l'une quelconque des revendications 1 à 5, **caractérisé en ce que** qu'après qu'il ait traversé une chambre de réaction (1,), on utilise le flux gazeux oxydant (6) pour préparer du dioxyde de soufre.
